# EUROPÄISCHE PATENTSCHRIFT

(11) **EP 1 407 242 B1**
(45) Veröffentlichungstag und Bekanntmachung des Hinweises auf die Patenterteilung: **15.06.2011**
(21) Anmeldenummer: 02751070.0
(22) Anmeldetag: 25.06.2002
(51) Int. Cl.: G01M 3/04

(54) **SCHNÜFFELLECKSUCHER UND VERFAHREN ZU SEINEM BETRIEB**
SNIFFING LEAK DETECTOR AND METHOD FOR OPERATION THEREOF
DETECTEUR DE FUITES ET MODE DE FONCTIONNEMENT ASSOCIE

(30) Priorität: 13.07.2001 DE 10133567
(43) Veröffentlichungstag der Anmeldung: 14.04.2004
(60) Teilanmeldung: 10188381.7
(73) Patentinhaber: Inficon GmbH, 50968 Köln (DE)
(72) Erfinder: BÖHM, Thomas, 50859 Köln (DE); KÜSTER, Gerhard, 51109 Köln (DE); LIEBICH, Jörn, 51145 Köln (DE); ROLFF, Randolf-Paul, 50169 Kerpen (DE)
(74) Vertreter: Selting, Günther
(86) Internationale Anmeldenummer: PCT/EP2002/006986
(87) Internationale Veröffentlichungsnummer: WO 2003/008923

(56) Entgegenhaltungen:
- DE-A- 3 247 975
- DE-A- 3 801 893
- DE-A- 19 911 260
- GB-A- 2 072 852
- US-A- 3 645 127
- US-B1- 6 179 444
- PATENT ABSTRACTS OF JAPAN Bd. 0112, Nr. 03 (P-591), 2. Juli 1987 (1987-07-02) & JP 62 025229 A (NIPPON OIL CO LTD), 3. Februar 1987 (1987-02-03)

## Beschreibung

Die Erfindung bezieht sich auf einen Schnüffellecksucher mit den Merkmalen des Oberbegriffs des Patentanspruchs 1 sowie auf Verfahren zum Betrieb von Lecksuchern dieser Art.

Lecksucher mit Schnüffeleinrichtungen sind bekannt (vgl. z. B. DE-A-24 41 124 und DE-A-199 11 260). Bei der Schnüffellecksuche wird ein Testgas enthaltender Prüfling mit Hilfe einer Schnüffelspitze abgetastet. Ist ein Leck vorhanden, dringt Testgas nach außen. Dieses wird über die Schnüffelspitze einem Gasdetektor oder Gassensor zugeführt. Die vom Gasdetektor abgegebenen Signale dienen unter anderem der Erzeugung von A-larmsignalen, vorzugsweise akustisch. Als Testgas dient vielfach Helium. Als Testgas kann auch ein ohnehin im Prüfling vorhandenes Nutzgas verwendet werden, bei Kühleinrichtungen z. B. ein Halogengas.

Die US 6179444B1 offenbart eine Laser-Lichtquelle mit einem Linsenaufbau für den Einsatz in einem Scanner. Der Scanner kann handbetätigt sein. Zur Bedienungserleichterung sind Sensoren (Geräusch-, Gravitations- oder Beschleunigungssensor) offenbart, mit deren Hilfe Scan-Vorgänge initiiert werden. Im Zusammenhang mit einem Scanner, der mit einem Geräuschsensor ausgerüstet ist, wird als Anwendungsbeispiel ein Lecksuchgerät mit einer Sonde erwähnt.

Der vorliegenden Erfindung liegt die Aufgabe zu Grunde, einen Lecksucher der hier betroffenen Art sowie die damit ausführbaren Lecksuchverfahren in mehrfacher Hinsicht zu verbessern.

Bei einem Lecksucher der gattungsgemäßen Art wird diese Aufgabe durch die kennzeichnenden Merkmale der Patentansprüche gelöst. Der Beschleunigungssensor bewirkt, dass Störsignale des bewegungsempfindlichen Gassensors unterdrückt werden.

Bei Schnüffelleclcsuchern ist es bekannt, den Gassensor im Handstück selbst unterzubringen, um kurze Ansprechzeiten zu erreichen. Dieses gilt insbesondere für Schnüffellecksucher, die aus dem Handstück und einem davon getrennten Versorgungsgerät bestehen. Die sich zwischen dem Handstück und dem Versorgungsgerät erstreckende Verbindungsleitung muss relativ lang sein (z. B. 5 m), so dass die Förderung der Messgase von der Schnüffelspitze zum Versorgungsgerät relativ lange dauern würde. Handelt es sich bei dem Gassensor um einen bewegungsempfindlichen Sensor (z. B. ein Infrarotensor, wie er aus der DE-A-199 11 260 bekannt ist), verursacht die Bewegung des Handstückes Störsignale, die zu falschen Messergebnissen führen können. Durch die Verwendung eines Beschleunigungssensors können solche Störsignale erkannt und z. B. unterdrückt werden. Dieses kann im einfachsten Fall dadurch geschehen, dass die Messsignalleitung unterbrochen wird, wenn vom Bewegungssensor Signale abgegeben werden. Die Schnüffellecksuche wird durch diese Maßnahmen einfacher und zuverlässiger.

Weitere Vorteile und Einzelheiten der Erfindung soll an Hand von in den Figuren 1 bis 5 dargestellten Ausftihrungsbeispielen erläutert werden. Es zeigern
- Figuren 1 und 2 schematisch dargestellte Lecksucher der hier betroffenen Art, wobei die Variante nach Fig 2 nicht zur Erfindung gehört, und
- Figuren 3 bis 5 Blockschaltbilder für Lösungen, die der Unterdrückung von Störsignalen bei der Verwendung von bewegungsempfindlichen Gassensoren dienen.

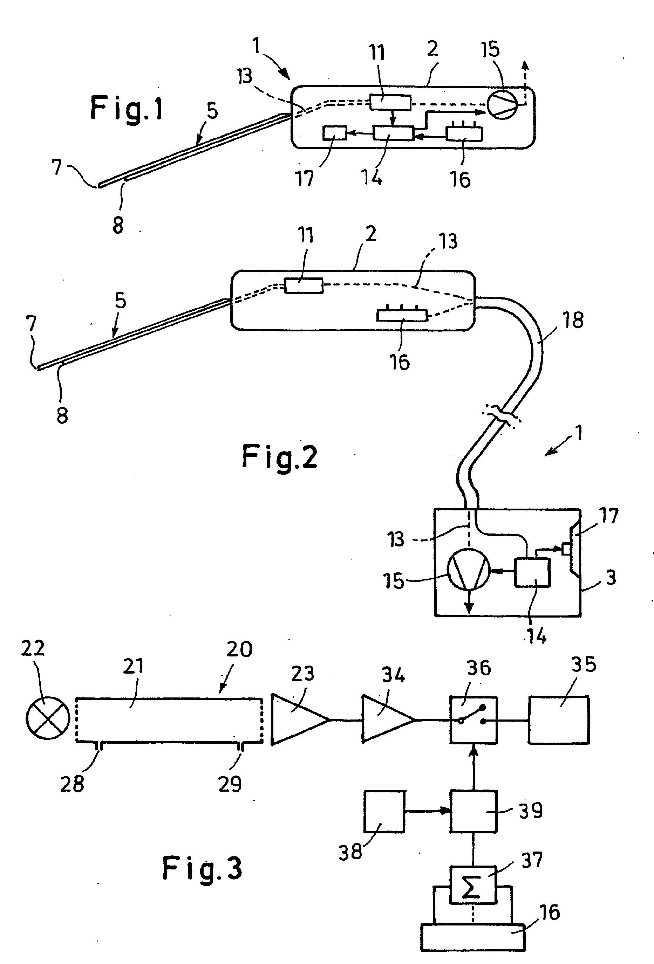

In den Figuren 1 und 2 sind der Lecksucher mit 1 und das Handstück mit-2 bezeichnet. Das Handstück 2 trägt eine Schnüffelspitze 5. Diese besitzt zwei örtlich versetzte Gaseinlassöffnungen 7 und 8. Die Gaseinlassöffnung 7 befindet sich im vorderen Endbereich der Schnüffelspitze 5. Sie-dient der Aufnahme von Messgas, das im , Falle eines Lecks Testgas enthält. Über die Gaseinlassöffnung 8 wird Referenzgas aus der Umgebung des nicht dargestellten Prüflings aufgenommen, um Testgasuntergründe berücksichtigen zu können.

Die Lösungen nach den Figuren 1 und 2 unterscheiden sich darin, dass bei der Ausführung nach Figur 1 alle Bestandteile des Lecksuchers 1 im Handstück 2 selbst untergebracht sind, während bei der Ausführung nach Figur 2 ein Handstück 2 und ein davon separates Versorgungsgerät 3 vorgesehen sind.

Im Handstück 2 befindet sich der Gassensor 11. Das auf Testgas zu untersuchende Gas wird mit Hilfe einer Förderpumpe 15 angesaugt und dem Gassensor 11 zugeführt (gestrichelt dargestellte Leitungen 13). Bei der Lösung nach Figur 1 befindet sich die Förderpumpe 15 im Handstück 2, bei der Lösung nach Figur 2 im separaten Versorgungsgerät 3. Weiterhin befindet sich im Handstück 2 der Beschleunigungssensor 16. Er liefert seine Signale an eine zu einem Block zusammengefasste Versorgungs-, Mess- und Anzeige-Schaltung 14, die bei der Lösung nach Figur 1 im Handstück 2, bei der Lösung nach Figur 2 im Versorgungsgerät 3 untergebracht ist. Als Beispiel für eine Alarmanzeige ist ein Lautsprecher 17 dargestellt. Er erhält seine Signale vom Block 14 und kann ebenfalls im Handstück 2 (Figur 1) oder im Versorgungsgerät 3 (Figur 2) untergebracht sein.

Auch die Förderpumpe 15 steht bei beiden Ausführungen mit dem Block 14 in Verbindung. Über diese Verbindung kann die Förderpumpe abgeschaltet und damit der Lecksucher in den gewünschten Stand-by-Zustand geschaltet werden, wenn das Handstück abgelegt ist und der Beschleunigungssensor über eine vorgewählte Zeit keine Signale liefert.

Bei der Lösung nach Figur 2 sind Handstück 2 und Versorgungsgerät 3 über eine Leitung 18 miteinander verbunden. Je nach Verteilung der einzelnen Bauteile im Handstück 2 und im Versorgungsgerät 3 umfasst die Leitung 18 elektrische und/oder gasführende Leitungen.

An Hand der Figuren 3 bis 5 soll erläutert werden, wie mit Hilfe des Beschleunigungssensors 16 durch Bewegungen des Handstückes 2 gestörte Signale unterdrückt werden können. Als Beispiel für einen bewegungsempfindlichen Gasdetektor ist schematisch ein Infrarotsensor 20 dargestellte. Er umfasst eine Küvette 21, der auf einer' Stirnseite eine IR-Lichtquelle 22 und auf ihrer anderen Stirnseite ein IR-Licht-Detektor 23 zugeordnet ist. Die Küvette 21 ist während der Durchführung der Lecksuche gasdurchströmt. Ihre im Bereich der beiden Stirnseiten angeordneten Anschlüsse sind mit 28 und 29 bezeichnet.

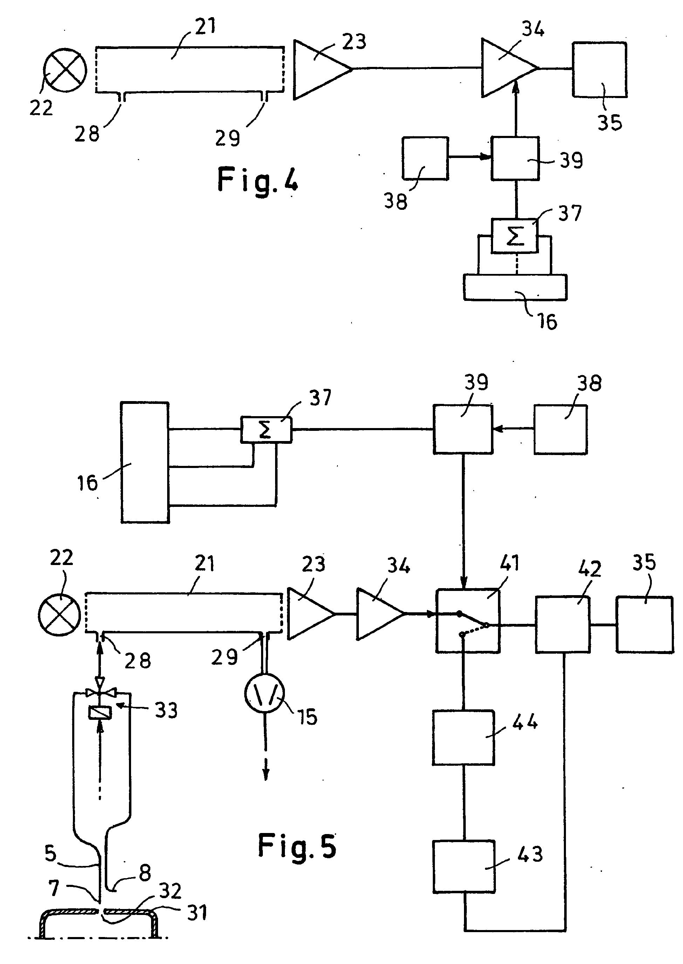

Figur 5 zeigt ein Beispiel für die Mittel zur Erzeugung der Gasströmung in der Küvette 21 (vgl. auch die deutsche Patentanmeldung 100 62 126.0). Mit Hilfe der Gasförderpumpe 15, die mit dem Anschluss 29 der Küvette 21 in Verbindung steht, werden über die Schnüffelspitze 5 mit ihren Gaseinlassöffnungen 7 und 8 Messgas und Referenzgas angesaugt. Der schematisch dargestellte Prüfling 31 weist ein Leck 32 auf, so dass Testgas im Messgas enthalten ist. Ein Steuerventil 33 dient der wechselweisen Zuführung von Messgas und Referenzgas zur Küvette 21. Die Pumpe 15 bestimmt die Geschwindigkeit, mit der diese Gase die Küvette 21 axial durchströmen. An den IR-Licht-Detektor 23 schließt sich ein Verstärker 34 an. Eine Anzeige (akustisch, optisch) ist mit 35 bezeichnet.

Bei der Schnüffellecksuche an einem Prüfling werden leckverdächtige Stellen (Lötstellen, Anschlüsse usw.) nacheinander mit der Schnüffelspitze 5 des Handstückes 2 abgetastet. Während dieser Abtastphase wird das Handstück relativ langsam bewegt. Die vom Gassensor gelieferten Signale sind nicht gestört. Der Beschleunigungssensor gibt keine oder nur vernachlässigbare Signale ab. Die vom IR-Licht-Detektor 23 abgegebenen Signale sollen nicht unterdrückt werden. Ist ein Leck vorhanden, lösen die die Anzeige 35 erreichenden Signale den vorzugsweise akustischen Alarm aus.

Bei der Bewegung der Schnüffelspitze 5 von einer der leckverdächtigen Stellen zu einer anderen oder zu seiner Ablage wird das Handstück üblicherweise relativ schnell bewegt. Allein vom bewegungsempfindlichen Gassensor gelieferte Störsignale könnten einen Alarm auslösen, obwohl kein Leck festgestellt wurde. Störsignale dieser Größenordnung sollen unterdrückt werden. Dabei ist es zweckmäßig, einen Grenzwert festzulegen und diesen Grenzwert in Abhängigkeit von der bei der Lecksuche gewünschten Empfindlichkeit zu wählen. Wird beispielsweise gefordert, dass bei Prüflingen alle Lecks größer als 3 Gramm pro Jahr angezeigt werden sollen, dann reicht es,aus, nur solche Störsignale zu unterdrücken, die eine Anzeige größer als 3 g/a liefern würden.

Die einfachste Form der Unterdrückung von Störsignalen ist ihre Abschaltung. Figur 3 zeigt dafür ein Ausführungsbeispiel. Zwischen dem Verstärker 34 und der Anzeige 35 befindet sich ein vorzugsweise elektronischer Schalter 36. Vom zwei- oder dreiachsig empfindlichen Beschleunigungssensor 16 gelieferte Signale werden zunächst einer Summenstufe 37 zugeführt. Übersteigen die von der Summenstufe 37 abgegebenen Signale einen bestimmten Wert, erfolgt die Unterbrechung des Messsignalpfades zwischen Detektor 23 und Anzeige 35. Die Einstellung des Grenzwertes erfolgt im Block 38, der im Block 39 zwischen Stufe 37 und Schalter 36 eine Schwelle festlegt.

Bei der Lösung nach Figur 4 beeinflussen vom Block 39 gelieferte Signale die Verstärkung im Messsignalpfad. Die Signale des Blocks 39 werden dem Verstärker 34 zugeführt und bewirken eine maßgebliche Reduzierung des Verstärkungsfaktors.

Bei der Ausführung nach Figur 5 werden vom Beschleunigungssensor 16 gelieferte Signale einem Umschalter 41 zugeführt. So lange Signale dieser Art den Umschalter 41 nicht erreichen, hat der Umschalter 41 die durchgezogen dargestellte Position. Die Messsignale des IR-Licht-Detektors 23 gelangen zur Anzeige 35. Gelangen von Bewegungen des Handstückes 2 verursachte Signale des Beschleunigungssensors 16 zum Umschalter 41, schaltet dieser auf die gestrichelt dargestellte Position, bevor gestörte Messsignale vom Detektor 23 die Anzeige erreichen.

Mit der Lösung nach Figur 5 soll erreicht werden, dass kurze Unterbrechungen des Messsignalpfades vom Benutzer nicht, längere Unterbrechungen zunächst nicht bemerkt werden. Die dazu vorgeschlagenen Mittel umfassen die Blöcke 42, 43 und 44. Block 42 befindet sich zwischen dem Umschalter 41 und der Anzeige 35. Er hat die Funktion eines Filters und gegebenenfalls einer Lock-in-Logik. Er steht in Verbindung mit Block 43, der die Aufgabe einer Messsignal-Nachbildung hat. Nach einer Umschaltung des Schalters 41 in die gestrichelt dargestellte Position gelangen vom Baustein 43 nachgebildete, den vorhergehenden Messsignalen entsprechende Signale über den Baustein 42 zur Anzeige 35. Bei kurzen, hastigen Bewegungen des Handstückes 2 findet eine kontinuierliche Anzeige von Messwerten statt. Bei Verwendung eines Lock-in-Verstärkers kann z. B. das noch nicht demodulierte Sinussignal nachgebildet werden, wobei als Maß der Anzeigewert verwendet werden kann.

Liefert der Beschleunigungssensor 16 über längere Zeit Signale, was bedeutet, dass der Schalter 41 für längere Zeit die gestrichelt eingezeichnete Position hat, dann ist es zweckmäßig, die nachgebildeten Signale langsam abklingen zu lassen, zweckmäßig mit einer solchen Geschwindigkeit, mit der auch die Messsignal-Anzeige bei der Beendigung der Lecksuche abklingt. Block 44, der sich zwischen Block 43 und dem Umschalter 41 befindet, hat die Funktion einer dazu geeigneten Zeitlogik.

In den Figuren 1 bis 5 sind jeweils Schaltungsblöcke mit bestimmten Funktionen dargestellt. Viele Teile der Schaltung können auch mit Hilfe eines Microcomputers mit geeigneter Software realisiert werden.

## Patentansprüche

1. Schnüffellecksucher (1) mit einem eine Schnüffelspitze (5) tragenden Handstück (2) und mit einem bewegungsempfindlichen Gassensor (11), z.B. einem Infrarotsensor oder pyroelektrischen Sensor,
**dadurch gekennzeichnet, dass**
er mit einem Bewegungen des Handstückes (2) registrierenden Beschleunigungssensor (16) ausgerüstet ist, welcher durch Bewegung des Handstücks verursachte Störsignale des bewegungsempfindlichen Gassensors, die zu falschen Messergebnissen führen, unterdrückt.

2. Schnüffellecksucher (1) nach Anspruch 1, derart ausgerüstet, dass für die Zeit, in der der Beschleunigungssensor (16) Signale liefert, eine Messsignalleitung unterbrochen wird.

3. Schnüffellecksucher (1) nach Anspruch 1, **dadurch gekennzeichnet, dass** der Beschleunigungssensor (16) mindestens in Bezug auf zwei Achsen bewegungsempfindlich ist.

4. Schnüffellecksucher (1) nach einem der Ansprüche 1 bis 3, **dadurch gekennzeichnet, dass** er mit einer Förderpumpe (15) für die von der Schnüffelspitze (5) angesaugten Gase ausgerüstet ist.

5. Schnüffellecksucher (1) nach Anspruch 4, **dadurch gekennzeichnet, dass** sich die Förderpumpe (15) im Handstück (2) befindet.

6. Schnüffellecksucher (1) nach einem der Ansprüche 1 bis 5, derart ausgerüstet, dass für die Zeit, in der der Beschleunigungssensor (16) Signale liefert, der Verstärkungsfaktor eines Verstärkers (34) in einer Messsignalleitung reduziert wird.

7. Schnüffellecksucher (1) nach einem der Ansprüche 1 bis 6, derart ausgerüstet, dass für die Zeit, in der der Beschleunigungssensor (16) Messsignale liefert, ein in der Messsignalleitung befindlicher Schalter (41) betätigt wird, der für diesen Zeitabschnitt auf einen Generator (43) für ein dem Messsignal nachgebildetes Signal umgeschaltet wird.

8. Schnüffellecksucher (1) nach einem der Patentansprüche 1 bis 7, **dadurch gekennzeichnet, dass** zur Durchführung der Schaltvorgänge Schaltmittel vorgesehen sind, die zumindest teilweise aus einem Microcomputer mit geeigneter Software bestehen.

## Claims

1. A sniffing leak detector (1) comprising a sniffing tip (5) supported by a handpiece (2), a gas sensor (11) being sensitive to movements, said gas sensor being one of an infrared sensor and a pyroelectric sensor,
**characterized in that** it is equipped with an acceleration sensor (16) for recording the movements of the handpiece (2), which acceleration sensor suppresses interference signals from the movement-sensitive gas sensor, caused by the movements of the handpiece and leading to corrupted measuring results.

2. A leak detector (1) according to claim 1, equipped such that for the period of time during which the acceleration sensor (16) supplies signals, a measurement signal line is interrupted.

3. A leak detector (1) according to claim 1, **characterized in that** said acceleration sensor (16) is sensitive to movements with respect to at least two axes.

4. A leak detector (1) according to one of claims 1 to 3, **characterized in that** it includes a supply pump (15) for gases being sucked in by the sniffing tip (5).

5. A leak detector (1) according to claim 4, **characterized in that** the supply pump (15) is located within the handpiece (2).

6. A leak detector (1) according to one of claims 1 to 5, equipped such that for the period of time during which the acceleration sensor (16) supplies signals, the gain factor of an amplifier (34) in a measurement signal line is reduced.

7. A leak detector (1) according to one of claims 1 to 6, equipped such that for the period during which the acceleration sensor (16) supplies measurement signals, a switch (41) in the measurement signal line is actuated which for this period of time switches over to a generator (43) providing a signal simulating the measurement signal.

8. A leak detector (1) according to one of claims 1 to 7, **characterized in that** switching means are provided to perform the switching operations, said switching means consisting at least partially of a microcomputer having suitable software.

## Revendications

1. Détecteur de fuites (1) comportant une pièce à main (2) portant une pointe renifleuse (5), et comportant un détecteur de gaz (11), par exemple un détecteur à infrarouge ou un détecteur pyroélectrique, sensible au mouvement,
**caractérisé en ce qu'**
il est muni d'un capteur d'accélération (16) détectant les mouvements de la pièce à main (2), ledit capteur supprimant des signaux brouilleurs du détecteur de gaz sensible au mouvement et causés par le déplacement de ladite pièce à main, lesdits signaux menant à des résultats de mesure faux.

2. Détecteur de fuites (1) selon la revendication 1, équipé de sorte qu'une ligne de signal de mesure est interrompue pendant le temps dans lequel ledit capteur d'accélération (16) fournit des signaux.

3. Détecteur de fuites (1) selon la revendication 1, **caractérisé en ce que** ledit capteur d'accélération (16) est sensible au mouvement au moins par rapport à deux axes.

4. Détecteur de fuites (1) selon l'une quelconque des revendications 1 à 3, **caractérisé en ce qu'**il est muni d'une pompe d'alimentation (15) pour les gaz aspirés par la pointe renifleuse (5).

5. Détecteur de fuites (1) selon la revendication 4, **caractérisé en ce que** la pompe d'alimentation (15) est située dans la pièce à main (2).

6. Détecteur de fuites (1) selon l'une quelconque des revendications 1 à 5, équipé de sorte que le facteur de gain d'un amplificateur (34) dans une ligne de signal de mesure est réduit pendant le temps dans lequel ledit capteur d'accélération (16) fournit des signaux.

7. Détecteur de fuites (1) selon l'une quelconque des revendications 1 à 6, équipé de sorte qu'un interrupteur (41) situé dans ladite ligne de signal de mesure est actionné pendant le temps dans lequel ledit capteur d'accélération (16) fournit des signaux, ledit interrupteur étant commuté, pour ce temps, à un générateur (43) d'un signal simulant ledit signal de mesure.

8. Détecteur de fuites (1) selon l'une quelconque des revendications 1 à 7, **caractérisé en ce que** des moyens de commutation sont prévus pour effectuer les opérations de commutation, lesdits moyens étant formés au moins partiellement par un microordinateur avec logiciels appropriés.
